# EUROPEAN PATENT SPECIFICATION

(11) **EP 1 485 815 B1**
(45) Date of publication and mention of the grant of the patent: **07.10.2009**
(21) Application number: 03707730.2
(22) Date of filing: 03.02.2003
(51) Int. Cl.: G06F 17/00, G06F 15/16, G06F 17/30

(54) **METHOD AND APPARATUS FOR CACHE PROMOTION**
VERFAHREN UND VORRICHTUNG ZUR CACHE-PROMOTION
PROCEDE ET DISPOSITIF POUR FAVORISER LE CACHE

(30) Priority: 05.02.2002 US 72238
(43) Date of publication of application: 15.12.2004
(73) Proprietor: Audible Magic Corporation, Los Gatos, CA 95032 (US)
(72) Inventor: SCHREMPP, James, B., Saratoga, CA 95070 (US); IKEZOYE, Vance, Los Gatos, CA 95030 (US); WOLD, Erling, H., El Cerrito, CA 94530 (US); KVITEK, Louis, San Jose, CA 95138 (US)
(74) Representative: Leeming, John Gerard
(86) International application number: PCT/US2003/003505
(87) International publication number: WO 2003/067459

(56) References cited:
- WO-A-00/63800
- WO-A-02/03203
- US-A- 5 918 223
- US-A1- 2001 037 304
- US-A1- 2003 014 530
- US-A1- 2003 061 352

## Description

### BACKGROUND

### Field of the Disclosure

The present disclosure relates to data communications, and, in particular, to a novel system and apparatus for cache promotion.

### The Prior Art

### Background

Once an audio or video work has been recorded it may be both downloaded by users for play, or broadcast ("streamed") over the Internet or conventional radio or television broadcast or satellite broadcast media. When works are streamed, they may be listened to or viewed by Internet users in a manner much like traditional radio and television stations.

The catalog of pre-recorded works that may be streamed over a media channel is immense; a broadcaster may choose among millions of pre-recorded works. In managing a media stream, broadcasters may differentiate a media stream from competitors by constructing a repertoire of works that are performed over a particular stream. For example, a broadcaster may limit the works performed over a particular media stream to a specific genre of music or television show or still image. Today many broadcasters limit their repertoire of works performed over a given media stream to several hundred. They may add and subtract only a few works from the repertoire every month.

Prior to the Internet, few media streams were available to reach consumers. For example, a radio receiver in a metropolitan area might be within broadcast range of 50 FM radio stations. When driving in the country, there might be only a handful of FM radio stations available to the listener. Furthermore, even fewer television streams were available to the consumer. Because of the inherent distance limitations on legacy media streams, a media stream in one geographic area would often utilize the same or very similar repertoire as a station in another geographic area. By way of example, every metropolitan area may have a "country music" station that performs essentially the same repertoire of music as country music station in other areas. Under these conditions, the actual number of unique works in the repertoire of all media in all geographies was relatively small.

New technologies have dramatically increased the number of media channels available for streaming content. Advances in the art such as local wireless networks, cost effective broadband connections, direct satellite broadcast, high quality compression techniques and the like are making the number of media channels available to reach consumers explode. In the case of new technologies that are geographically neutral, such as digital media streaming over the internet and direct satellite broadcast, a given media stream has a much larger potential audience. In an effort to differentiate media streams and capture specific consumers, broadcasters are creating new repertoires for their media streams. As an example only, a broadcaster may now find it economically viable to offer a media stream of the music of a certain very few performers. One could imagine an audio stream of only music written or performed by Frank Sinatra.

This plethora of new repertoires promises to dramatically increase the actual number of unique works performed over all media channels.

Media streams often contain both performances of pre-recorded work and extemporaneous work, such announcements or other narrative material. Furthermore, media streams may contain no information about the work being performed, or the information provided may be imprecise.

Given the widespread use of streamed media, audio works, or video works may need to be identified. The need for identification of works may arise in a variety of situations. For example, an artist may wish to verify royalty payments or generate their own Arbitron®-like ratings by identifying how often their works are being performed. Thus, playlists of media may need to be generated. Additionally, for competitive analysis a business may wish to know when and where a competitor is placing advertising in the media. Furthermore, a broadcast source may want to know when and how often a competitive broadcast source is using pre-recorded material. A comprehensive playlist would accurately account for all pre-recorded works that are streamed over the media.

Further complicating the identification are improvements in technology allowing a tremendous number of new works to be produced, such as new song recordings, new advertisements, news worthy audio clips, and station promotions. A comprehensive playlist preferably would include these new works, which may be performed over a wide variety of media streams.

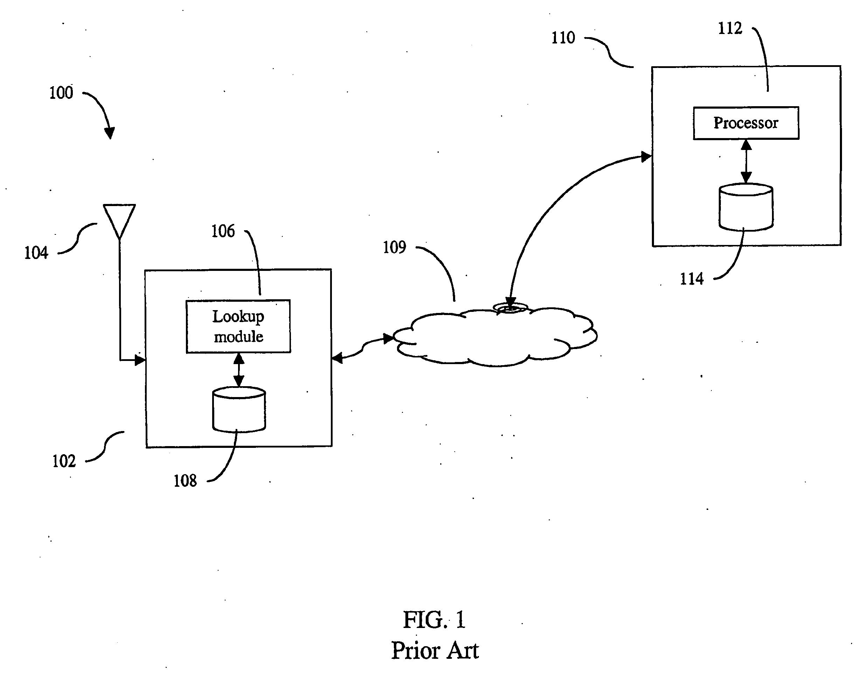

Figure 1 shows a playlist generation system 100 of the prior art. The system 100 may include one or more remote detection modules 102 deployed at various locations throughout a broadcast area. Each detection module 102 may include an antenna 104 for receiving broadcast signals and providing the signals to an analysis and lookup module 106. The module 106 is typically configured to identify the content of the received signal by comparing its audio content against a database 108 of reference representations of known works.

If a match is made, typically the module 102 will keep a record of all matches made during a predetermined period of time. For example, the module 102 may keep a record of song titles detected during a 24-hour period.

The system 100 may further include a playlist server 110 having a processor 112 and database 114. The server 110 is typically configured to receive information such as the titles of identified songs from the one or more detection modules 102 through a network such as the Internet 109 and generate a playlist which may be stored on database 114.

However, the system 100 is typically unable to identify works for which a corresponding reference representation does not exist in the reference database. In addition, the system 100 must attempt to identify the entire media stream against the entire reference database.

As noted above, the entire reference database of all available works may be very large. Typical systems today may restrict the number of samples in the reference database 108 to a certain maximum number that will yield acceptable response time. In some implementations, samples of newly released works are included in the active database and then one of many conventional cache demotion strategies may be used to keep the size of the active database below the certain maximum number. For example, Least Frequently Used may be an acceptable strategy in this situation. This strategy may leave database 108 populated with samples of those works which are most often performed over the most media streams being monitored. When a work is performed which is not in the active database 108 then the performance may not be detected.

To ensure that more works are identified, systems in the prior art may retain segments of media streams which are not identified in the active database 108 and attempt to identify them using a second lookup module configured to use the entire available reference database to identify these segments. A multi-tier approach may be used with segments of the media streams that are unidentified being passed on to the next tier which is configured with a more comprehensive database.

As noted earlier, media streams contain both pre-recorded works and extemporaneous performances. Segments of the media stream containing extemporaneous performances will not have corresponding entries in any reference database. Thus, all tiers of the system may need to attempt to identify all the segments of the media streams which contain extemporaneous performances.

Document WO 00/63800 describes a middle-tier web server with a queryable cache that contains items from one or more data sources. The items are included in the cache on the basis of the probability of future hits of the items. The probability determination may be made by analyzing the hit rates on items or by means of information such as a period of time during which frequent hits can be expected.

### SUMMARY

A method as defined in claim 25 and apparatus as defmed in claim 1 are disclosed for managing the cache of a reference database. Aspects of disclosed systems may depend upon the identification of repeat performances to drive a cache promotion strategy. In one embodiment, a system may comprise at least one analysis module for receiving a work from a plurality of sources and generating a corresponding representation thereof; at least one First Tier identification (ID) server for identifying received works; and at least one Second Tier ID server for identifying repeating received works. Multi-tiered systems are also disclosed.

### BRIEF DESCRIPTION OF THE DRAWING FIGURES

Figure 1 is a prior art diagram of a system.
Figure 2 is a block diagram of one aspect of a disclosed system including one or more analysis modules and ID servers.
Figure 3 is a block diagram of one aspect of an analysis module.
Figure 4 is a flowchart of one aspect of a disclosed system.
Figure 5 is a flowchart of one aspect of a disclosed system.
Figure 6 is a flowchart of a further aspect of a disclosed system.
Figure 7 is a flowchart of yet a further aspect of a disclosed system.
Figure 8 is a flowchart of multi-server aspect of a disclosed system.

### DETAILED DESCRIPTION

Persons of ordinary skill in the art will realize that the following description is illustrative only and not in any way limiting. Other modifications and improvements will readily suggest themselves to such skilled persons having the benefit of this disclosure.

This disclosure may relate to data communications. Various disclosed aspects may be embodied in various computer and machine readable data structures. Furthermore, it is contemplated that data structures embodying the teachings of the disclosure may be transmitted across computer and machine readable media, and through communications systems by use of standard protocols such as those used to enable the Internet and other computer networking standards.

The disclosure may relate to machine readable media on which are stored various aspects of the disclosure. It is contemplated that any media suitable for retrieving instructions is within the scope of the present disclosure. By way of example, such media may take the form of magnetic, optical, or semiconductor media.

Various aspects of the disclosure may be described through the use of flowcharts. Often, a single instance of an aspect of the present disclosure may be shown. As is appreciated by those of ordinary skill in the art, however, the protocols, processes, and procedures described herein may be repeated continuously or as often as necessary to satisfy the needs described herein. Accordingly, the representation of various aspects of the present disclosure through the use of flowcharts should not be used to limit the scope of the present disclosure.

### Exemplary structure

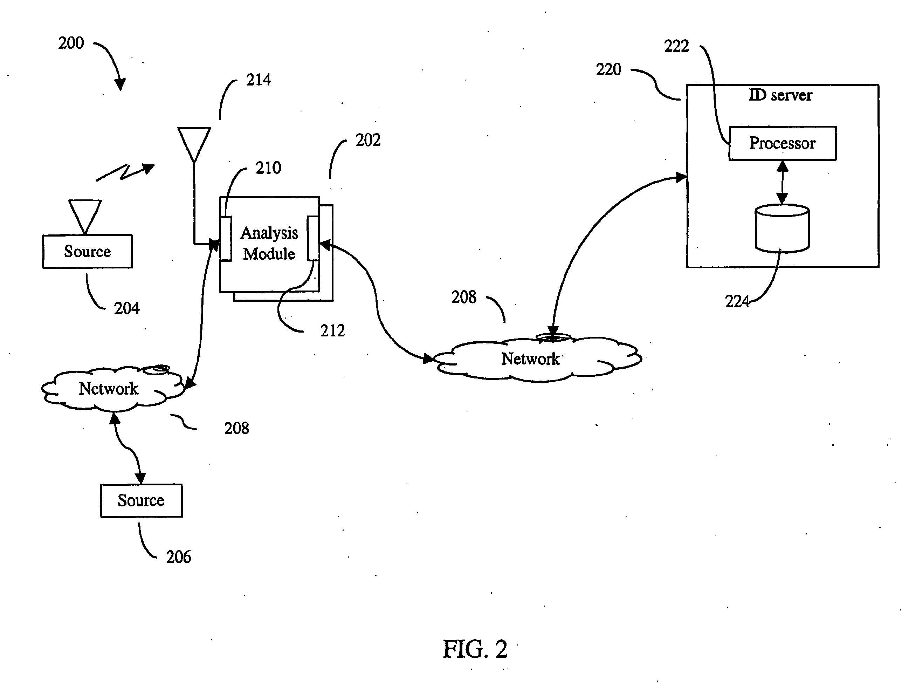

Figure 2 is a schematic diagram of one aspect of a disclosed playlist generation system 200. The system 200 may include at least one analysis module 202 for receiving a media stream from a broadcast source 204 as is known in the art. The analysis module may include one or more conventional antennae 214 coupled to the analysis module 202 through an input port 210. The input port 210 may include a conventional receiver for the reception of desired broadcast signals. The input port 210 may also be configured to provide remote control functionality for allowing the remote control and configuration of the receiver, such as providing for remote tuning. The input port 210 may be further configured to digitize received signals in digital formats using protocols known in the art, such as PCM.

The analysis module 202 may also be configured to receive a media stream from one or more networked sources 206. In one aspect of a disclosed system, the input port 210 of the analysis module 202 may be configured to monitor sources providing content in standard formats such as Real®, QuickTime®, Windows Media®, MP3®, and similar formats, using hardware and software as is known in the art.

In another aspect of a disclosed system, the input port 210 may be configured to directly receive audio or video through any of the various means know in the art, such as a microphone, video acquisition system, VHS tape playback unit, or audio cassette playback unit. These media streams may also be provided in standard formats such as MP3, Windows Media, and similar formats. Thus, the analysis module 202 may be configured to receive a work prior to the work being presented to the broadcast system or network source. It is envisioned that this presentation could occur almost simultaneously.

The input port 210 may be operatively coupled to a network 208 through which the source 206 may be accessed. The network 208 may comprise any packet- or frame-based network known in the art, such as the Internet. The input port 210 may also be configured to access the network 208 through any means known in the art, such as through traditional copper connections. Furthermore, the input port 210 may also be configured to access the network 208 using wireless connectivity methods as known in the art, including low-power broadband methods such as Bluetooth®, or cellular-based access methods such as those used to provide wireless connectivity to cellular phones and personal digital assistants (PDAs).

The analysis module 202 may also include an output port 212 for providing connectivity to the network 208. The output port 212 may comprise a separate unit within the analysis module 202 and may include hardware and software to provide the same functionality as the input port 210. Additionally, it is contemplated that the output port 212 may comprise substantially the same circuitry as the input port 210 in order to save space and cost.

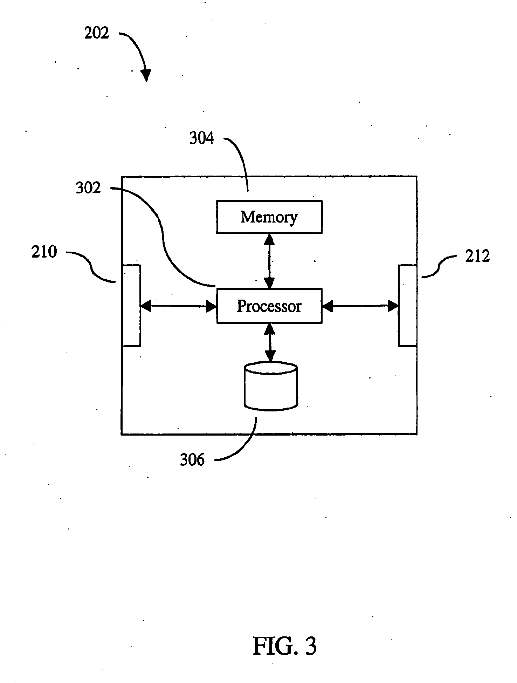

Referring now to Figure 3, a conceptual block diagram of one aspect of a disclosed analysis module 202 is shown. The analysis module 202 may include a processor 302 for operating various aspects of the present disclosure. The processor 302 may be operatively disposed between the input port 210 and output port 212.

It is contemplated that any processor known in the art may be employed in the module 202, and the choice of a processor may depend on the application. For example, if the module 202 is embodied in a personal computer, the processor 202 may comprise a microprocessor capable of running conventional operating systems such as Microsoft Windows®, while if the module 202 is deployed in a mobile unit such as a PDA, the processor 202 may need only be capable of running an operating system such as Palm OS®, or other embedded systems such as may be present in a cell phone or other consumer device.

The module 202 may include ancillary hardware and software, such as conventional memory 304 and a conventional database 306 for the storage and retrieval of various aspects of the disclosed system and data.

The module 202 may be configured to generate a representation of received work which may then be used by the system to identify performed works contained in the received work. It is contemplated that a wide variety of methods may be used by the analysis module 202 to generate the representation. The analysis module may be configured to generate a representation of the received work using the psychoacoustic properties of the audio content of the received work. Such methods are known in the art. For example. The analysis module may generate feature vectors as disclosed in US Patent #5,918,223 to Blum, et al., which describes, in one embodiment, the analysis module generating feature vectors by analyzing a variety of acoustical features of a sound file. Loudness, bass, pitch, brightness, bandwidth, and Mel-frequency cepstral coefficients (MFCCs) are measured at periodic intervals (referred to as "fames") over the length of the sound file. The per-frame values are optionally stored for applications that require that level of detail. Next, the per-frame first derivative of each of these features is computed. Then the analysis module computes specific statistical measurements, namely the mean and standard deviation, of each of these features, including the first derivatives, to describe their variation over time. The statistical measurements are weighted by loudness so that perceptually important (i.e., louder) sections of the second file are emphasized. This set of statistical measurements is represented as an N-vector (a vector with N elements), also known as a "feature vector."

For musical applications, the creation of an additional, separate rhythm feature vector is described in US 5,918,223. The rhythm feature vector includes values for inverse duration (the reciprocal of the duration of the sound), log tempo (a log of the tempo), pattern ( a measure of how patterned the rhythm is, as determined by the maximum height of the bass value's spectrum), and the rhythm trajectory (an array of values representing a time function that captures the rhythm pattern).

Additionally, the module 202 of the present invention may use audio or video spectral or wavelet representation techniques as are known in the art. For example, other representation forms may comprise the text output of a speech recognition system, text output of a close captioned transmission, or a musical score produced by a music transcription system. In another embodiment, the representation may comprises a bit calculated key using any of the techniques as are known in the art such as MD5 hash and CRC. It is contemplated that a wide variety of analysis methods may be employed singly or in combination advantageously in the present disclosure.

Referring back to FIG. 2, the system 200 may further include at least one identification (ID) server 220 for identifying a received work. The ID server 220 may identify received works using a representation received from the analysis module 202 through network 208. Though FIG. 2 shows the ID server 220 coupled to the same network 208 as the analysis module 202, it is to be understood that the various components of the present disclosure may be coupled to different networks at different times.

The ID server 220 may comprise a computer suitable for running an operating system such as Microsoft Windows®, UNTX®, LINUX®, MAC OS®, and the like. The ID server 220 may include a conventional processor 220 for operation of the server. The ID server may further include associated hardware and software known in the art such as a conventional database 224 for storing embodiments of the disclosure or data.

It is contemplated that the ID server 220 may be configured to identify received work using a variety of method known in the art. The method for identification may correspond to the method(s) used to generate the representation within the analysis module. For example, the ID server 220 may be configured to perform identification using the methods disclosed in US Patent #5,918,223 to Blum, et al, if the representation were generated using corresponding methods. US Patent #5,918,223 discloses, for example, the ID server 220 being configured to perform identification by comparing feature vectors and/or rhythm feature vectors. In one embodiment, a feature vector and/or rhythm vector for a sample sound file will be created. Then all database records will be measured for how similar their feature vectors and/or rhythm vectors are to the sample vector. The basic equation is to find the difference between each element of the sample vector and each element of every database vector. This difference can be normalized by computing the standard deviation for each element of the vectors or by computing the range for each element across database entires. Alternatively, the standard deviations stored in the feature vectors themselves may be used as the normalization, instead of using the standard deviations (or the ranges) over all sounds in the database. Once the normalization value for each element has been computed (e.g., using the standard deviation or range methods), it is stored in a normalization vector. A simple Euclidean distance measure can then be used to find the distance of each database vector from the sample vector. Once the distance is computed between the sample sound and each database record, the records can be sorted by distance to create an ordered list of the most similar sounds in the database to the sample sound.

In some applications as described in US 5,918,223, the user might want to retrieve sounds that match a given sound almost exactly. A more exact and detailed match is possible by looking at the values frame by frame, instead of comparing their statistics as above. This approach requires that the all of the values be stored, not just their means and standard deviations. Value comparison is accomplished by summing the weighted differences between sound #1s and sound #2s values of each acoustic attribute. The overall distance between the two sounds is the average of the distances between each pair of frames.

To compare rhythm feature vectors, the overall distance between two rhythms is computed as a weighted average of their distances for each feature in the rhythm feature vectors. The rhythm features used in comparing rhythms are inverse duration, log tempo, pattern, and the rhythm trajectory.

Another example of a method of identifying received work would be the pure spectral representations as are known in the art. It is envisioned that other representations such as wavelets may be used. The invention could also identify the received work from the speech recognized text compared against a database of song lyrics using any of a variety of methods known to those skilled in the art.

Yet another example would be any of a number of search techniques as are known in the art when the representation is a bit calculated key.

The system may also identify the received work by searching a collection of musical works for musical note sequences that correspond to the musical score in the representation.

In another configuration the system may use a combination of identification techniques, each of which correspond to a representation of the received work. By using several identification techniques, the chance of a misidentification or missed identification may be greatly reduced.

Though the analysis module and ID server are shown as being located separately, it is contemplated that they also may be co-located in a single server. For example, it is contemplated that the analysis module and ID server may each be embodied in a single board computer wherein the analysis module and ID server are housed in a single unit and operatively coupled through a common backplane.

### Exemplary operation

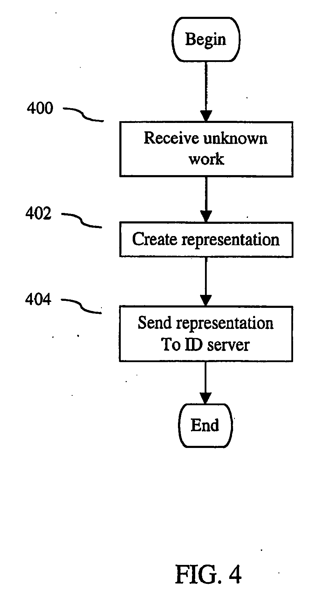

Figure 4 is a flowchart of one aspect of a disclosed method for automatically generating a playlist. The process begins in act 400, where at least one media stream is received by an analysis module. The analysis module may comprise hardware and software substantially as shown and described above.

Additionally, one or more of the analysis modules may be configured to receive a plurality of stream sources simultaneously for analysis. It is contemplated that the analysis modules may be located and configured to receive and analyze a wide variety of content, including analog radio or video, digital streaming audio or video, VHS tape, audio cassette tape or any other media.

In act 402, the analysis module then creates a representation of the received work as shown and described above. The representation may be created by the analysis module by extracting psychoacoustic properties from the received work as described above.

In act 404, the representations created by the one or more analysis modules may be provided to an ID server. The ID server may comprise hardware and software as described above. It is contemplated that the ID server may comprise a single server, multiple servers networked at a single location, or multiple servers located at different locations.

It is contemplated that the various analysis modules may provide representations to one or more ID servers in a wide variety of manners. For example, all of the analysis modules present in a system may provide representations in real-time. Or, different analysis modules may be configured to provide representations at different intervals depending on the needs of the end user. The analysis modules may transmit representations every sixty seconds, hourly, or as often as is needed.

In some cases where network connectivity is challenging, the representations may be batched up and sent to the ID server(s) once a day or less. In particularly harsh or secretive conditions, the representations may be stored within the analysis modules until the modules could be physically retrieved and operatively coupled to an ID server at another physical location.

It is contemplated that an out-of-band event may be used to trigger the transmission of representations. For example, such a trigger may comprise the initialization of a connection to a network, or the activation of media playing software or hardware.

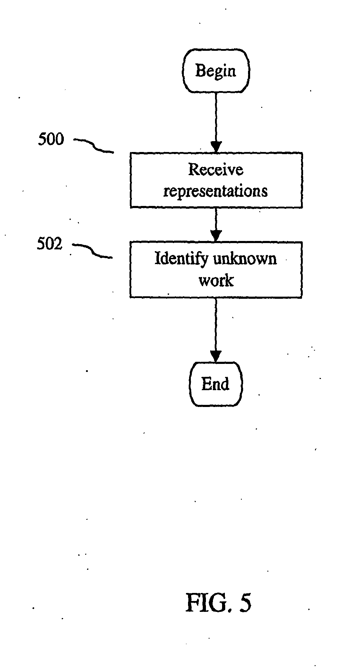

Figure 5 is a flowchart of a further disclosed aspect of a disclosed method. The process begins with act 500, where an ID server receives at least one representation of a received work. The representations may be received from analysis modules as described above.

In act 502, the ID server identifies portions of the received work based upon the representation. This identification may be performed using the methods as described above. The identification may include such information as the song title, artist, label, or any other information as is known in the art that may be associated with the work. The identification information might contain information such as the name of the advertiser or a descriptive notation of an FCC broadcaster identification segment. The identification information might contain a narrative description of a news segment.

Once an identification of a received work is made, it is contemplated that a wide variety of further acts maybe performed. For example, the identifications made by the ID server may be used to construct or maintain a playlist database. Such a playlist may be stored on the ID server, or on a distant server. As will be appreciated by those skilled in the art, if representations are provided to the ID server in real-time (or near real-time depending on the equipment or network used), a playlist may be generated in corresponding real-time. Thus, a playlist may be generated in real-time from inputs provided from distant geographic locations or multiple sources that contains a comprehensive playlist of every identified media segment.

Additionally, the identification may be transmitted back to the analysis module which generated the representation. This may be advantageous where it is desired to generate a playlist for the particular analysis module's location or user. Thus, the ID server may be configured to provide an identification back to the source analysis module.

The identity of the received work may also be used for the maintenance of the system. Typically, copies of received works are stored on local drives for audit purposes. Since the intermediate representation files may be larger in size than the identities, it may be desirable to configure the analysis module to purge intermediate representations for identified works to recover drive space. It is contemplated that the ID server may be configured to transmit the identity of received works back to the generating analysis module, and the corresponding part of the representation may then be deleted from local drives by the analysis module, thereby recovering valuable capacity.

Furthermore, it is contemplated that the ID server or analysis module may be configured to send information regarding identified works to third parties, such as third-party servers. Additionally, the ID server or analysis module may be configured to provide an electronic notification to third parties of identifications made by the ID server. Examples of electronic notifications may include email, HTTP POST transactions, or other electronic communication as is known in the art. As is known by those skilled in the art, these electronic notifications may be used to initiate an action based on their content. For example, such notifications may allow the playlist to be accessed in real-time or as desired.

It is contemplated that the ID server may be configured to provide customized playlists containing information tailored to a customer's individual needs. For example, a customer may wish to be notified whenever a certain work is broadcast, or whether a particular work is broadcast on a particular media outlet. Customers may wish to have complete playlists provided to them periodically at desired intervals that may include statistics known in the art. By using the system as disclosed herein, such requests may be satisfied automatically in real-time, or at whatever interval may be desired. It is to be understood that any of the aspects of the present disclosure may be performed in real time or as often as desired.

### Unidentified segments

During the process described above, the received work presented to the system may contain segments which may not be identified. In an aspect of a disclosed system, such unidentified segments may be examined to provide useful information. For example, if a particular unidentified segment is repeated often it may contain a new song or commercial or other pre-recorded work that warrants further action.

In one aspect of a disclosed system, the ID server may examine the representations of unidentified segments, and determine that some sub-segments were actually repeat performances of a single work. Furthermore, this examination may extract a plurality of other characteristics of the original broadcast such as the amount of musical content, amount of speech content, a transcription based on speech recognition, the beat of any music present, etc. These characteristics of the unidentified segments may then be used to classify the unidentified received representations.

For example, a sub-segment that has been performed more than once may be correlated with a high amount of musical content and a certain minimum length of play time to indicate that a new song has been detected. Correlating other values and characteristics could indicate that a new advertisement has been detected. In some cases a corresponding segment of the original broadcast signal could be retrieved and played for a human to perform an identification.

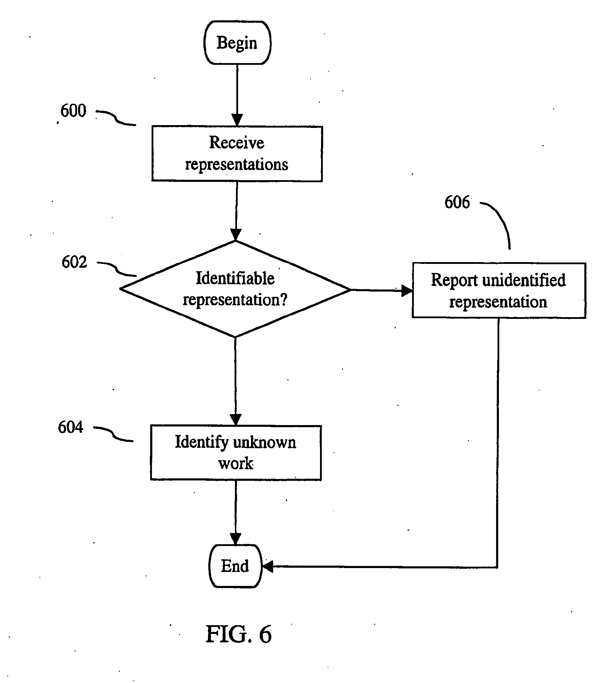

Figure 6 is a flow diagram of a method for identifying new media content. The process of FIG. 6 may be performed by any of the structure disclosed in this disclosure.

The process of FIG. 6 begins in act 600, where a media stream is received. The received media content may be delivered over any transmission medium as disclosed above. The process of FIG. 6 may receive content from one or more media streams. It is contemplated that the received work may comprise representations provided by an analysis module to an ID server as described above. In the discussion that follows, the terms segments and representations may be used interchangeably. Furthermore, when the following discussion discloses operations on a segment, that same operation may be performed on any part of the segment, or a sub segment, where the sub segment may overlap other sub segments.

In query 602, the system determines whether the received work can be identified. If the work can be identified, the work may be identified in act 604. The determination and identification acts may be performed as disclosed above.

If the received work cannot be identified, then the unidentified segment may be reported to the system in act 606. It is contemplated that the unidentified segment may be indexed and cataloged. Additionally, a list of unidentified segments may be generated.

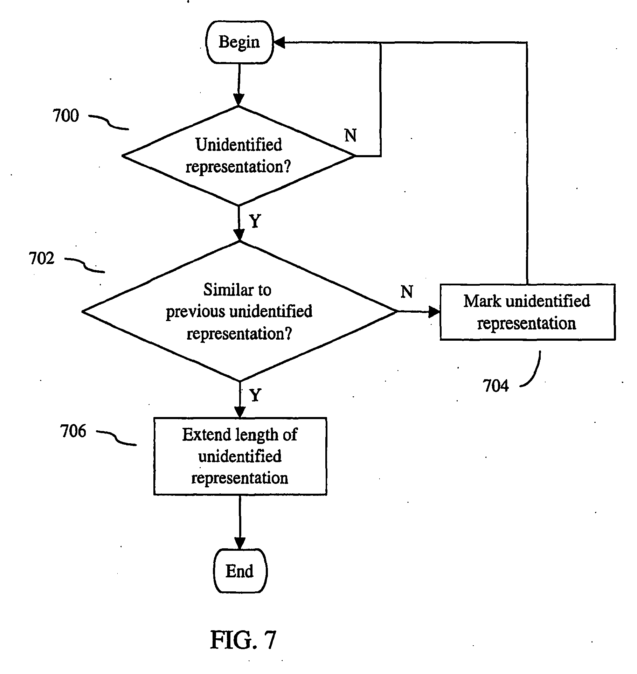

Figure 7 is a flow diagram of a further aspect of identifying new media content. The process of FIG. 7 begins in query 700, where the system waits to receive an unidentified segment.

In query 702, it is determined whether the received unidentified segment is similar to any part of any previously received unidentified segment. In one embodiment, the analysis performed in query 702 may comprise decomposing each unidentified segment into a series of overlapping 5-second sub segments and comparing each unidentified sub segment against other unidentified sub segments. It is contemplated that a wide variety of similarity measurement techniques may be used, such as those used to identify segments as disclosed above. For example, a threshold for similarity may comprise the vector distance between unidentified segments computed as disclosed above. The choice of similarity measurement may dictate the length of the matching sub segments discovered.

If the unidentified segment is not determined to be similar to a previously received unidentified segment, then the segment may be indexed and cataloged in act 704. Such a segment may then serve as a reference against which future unidentified segments may be compared.

If an unidentified segment is determined to be similar to a previously received unidentified segment, the system may conclude that similar unidentified segments may be performances of the same work, e.g., from the same master recording. When the similarity comparison process indicates that the unidentified sub segment is from the same work as another unidentified sub segment, then the system may attempt to extend the length of the similar unidentified segments by 'stitching' together contiguous unidentified sub segments which also meet the criteria of being performances of the same work. These extended segments consisting of similar earlier and later unidentified segments is referred to herein as a "super segment".

Groups of super segments may be created which consist of contiguous runs of unidentified segments collected from one or more media streams that may all be performances of the same work. It is contemplated that super segments may comprise any length, and may preferably have a length corresponding to standard media lengths such as 15, 30 seconds, 60 seconds, 13 minutes, or even an hour. Of course, other lengths may be used.

In a further exemplary embodiment, once a super segment has been created it will be included in the process of FIG. 7. Thus, newly received unidentified segments may be continuously added to a particular super segment if it is determined to be similar to any of the unidentified segments which are contiguous with another super segment in the same group of super segments. This action may extend the length of each super segment in the particular group of super segments. Thus, through the analysis of the present disclosure, a listing may be produced which includes the largest possible repeating segments across all time and across all the monitored media streams.

These repeating segments may contain valuable information and may be reported on. In one embodiment, super segments may be reported on by length. For example, any repeating segments less than 63 seconds in length may represent advertisements, news segments, or station promotions. In another embodiment, any repeating segments between 2 and 15 minutes may indicate a song. Additionally, longer repeating segments may indicate an entire broadcast is being repeated, such as a radio talk show or TV show.

It is contemplated that the ID server as disclosed above may perform the process of FIG. 7. Once super segments are found, it is contemplated that a wide variety of further acts maybe performed. For example, the unidentified repeating segments found by the ID server may be used to construct or maintain a new works playlist database. Such a new works playlist may be stored on the ID server, or on a distant server. These repeating segments may be merged into a playlist report of identified media, thus making the playlist comprehensive of all master recordings. As will be appreciated by those skilled in the art, if representations are provided to the ID server in real-time (or near real-time depending on the equipment or network used), a new works playlist may be generated in corresponding real-time. Thus, a new works playlist may be generated in real-time from inputs provided from distant geographic locations or multiple sources that contains a comprehensive playlist of every unidentified media segment or super segment.

Often a substantial time interval will pass between performances of a work over a given media stream. However, the same work is often performed on several different media streams. The time between performances of the same work on different media streams may be far less than the time between performances of the work on any one media stream. Furthermore, advertisements may often play concurrently over several different media streams as the advertiser tries to achieve great consumer impact. Thus, the system described herein will preferably recognize a new work as soon as it is performed a second time over any monitored media stream.

In a further aspect, the unidentified segments and super segments may be transmitted back to the analysis module which generated the representation. This may be advantageous where it is desired to generate a new work playlist for the particular analysis module's location or user. Thus, the ID server may be configured to provide unidentified segments or super segments back to the source analysis module. In this case, the source analysis module may decide to hold the original source audio corresponding to the new work super segment for future identification through more traditional, human based, methods.

It is envisioned that the number of reference media samples may grow large on an ID Server, possibly resulting in system performance degradation. In certain aspects of the disclosed system, it may therefore be desirable to limit the size of the reference database. In one exemplary embodiment, an ID Server may use a Least Recently Used (LRU) strategy to remove from its reference database any reference samples for media works that have not been identified in a media stream in a predetermined amount of time. The LRU cache demotion strategy may be implemented as is well known to those skilled in the art.

### Multi-tier server aspect

To further improve the overall performance of the system, the workload for identifying works may be distributed over multiple servers. For example, a multi-tiered configuration may be deployed using a First Tier ID Server and a Second Tier ID Server, configured substantially as described above, but utilizing different reference databases. The First Tier ID Server may be configured to keep only a working subset of all reference samples in an active identification database. For example, the First Tier ID server may include a reference database of segments expected to be detected. This working subset may be comprised of both known reference samples and super segment groups. A larger reference set may be in use on a Second Tier ID Server that may include segments and super segment groups. In this configuration the First Tier ID Server may send representations of unidentified super segments to the Second Tier ID Server for an attempted identification against the larger reference set.

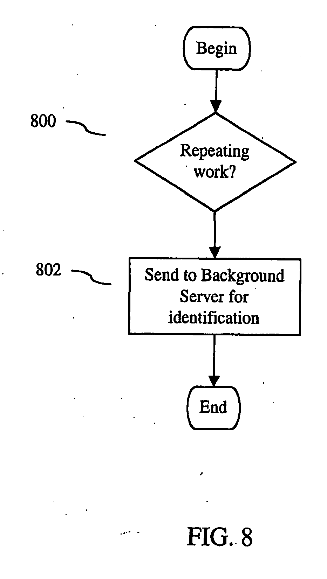

Figure 8 is a flowchart of a two-tiered identification aspect of a disclosed system. The process may begin in act 800 where it is determined whether a repeating work has been received. If an unidentified work has been received more than once, known as a super segment group, then the First Tier ID Server may send a super segment from the group to a Second Tier ID Server for identification in act 802. In the aspect of FIG. 8, the Second Tier ID Server only attempts to identify detected super segments. In other words, only repeating segments are sent to the Second Tier ID Server for an identification attempt. An unidentified work which has failed to be detected more than once is not sent to the Second Tier ID Server for identification.

As will be appreciated by those skilled in the art, such a strategy can significantly reduce the load on the Second Tier ID Server by preventing extemporaneous works from being sent to the Second Tier ID Server for an attempt at identification, which is destined to fail. Essentially, extemporaneous performances may be culled from the representation of the media stream by the First Tier ID Server.

If the Second Tier ID Server is successful in identifying the super segment, then the Second Tier ID Server may alert the First Tier ID Server to add the reference sample now known to correspond to the super segment into the First Tier ID Server reference database. In addition, the First Tier ID Server may also use the results of the Second Tier ID Server identification as if the First Tier ID Server had made the identification. It will be appreciated that by this act the number of unidentified segments sent to the Second Tier ID Server can be dramatically reduced through the optimization of the set of reference samples in use by the First Tier ID Server. Thus, the identification of a super segment by a Second Tier ID Server may drive the reference database cache promotion strategy.

As will be appreciated by those skilled in the art, the culling and cache promotion strategies described above could be utilized in a system consisting of any number of tiers of ID Servers. For example, each successive tier (n+1) may have a larger database than the previous tier (n). Each tier may be composed of a number of servers with the same database all working in parallel. In this strategy, the system may attempt identification against all tiers at the same time, in parallel. When one tier reports identification, the system may abort the in-process identifications on the other tiers.

Alternatively, more tiers may be deployed with successively smaller databases (n-1) until a desired price-performance point is reached. Additionally, as the size of the total database grows, additional n+1 tiers may be deployed.

Furthermore, it is contemplated that the ID server or analysis module may be configured to send information regarding detected new works to third parties, such as third-party servers. Additionally, the ID server or analysis module may be configured to provide an electronic notification to third parties of new work detection made by the ID server. Examples of electronic notifications may include email, HTTP POST transactions, or other electronic communication as is known in the art. As is known by those skilled in the art, these electronic notifications may be used to initiate an action based on their content. For example, such notifications may allow the new works playlist to be accessed in real-time or as desired. The identification of a new work may be used to raise an alert that a new advertisement, song, or news clip has just been released to media casters.

It is contemplated that the ID server may be configured to provide customized new works playlists containing information tailored to a customer's individual needs. For example, a customer may wish to be notified whenever a new work with curtain characteristics, as described above, is detected, or whenever a particular type of new work is detected on a particular media outlet For example, new works reports may be generated which classify unidentified segments based on length. Customers may wish to have complete new works playlists provided to them periodically at desired intervals that may include statistics known in the art. By using the system as disclosed herein, such requests may be satisfied automatically in real-time, or at whatever interval may be desired. It is to be understood that any of the aspects of the present disclosure may be performed in real time or as often as desired.

While embodiments and applications have been shown and described, it would be apparent to those skilled in the art that many more modifications and improvements than mentioned above are possible without departing from the inventive concepts herein.

## Claims

1. A (new) media identification system (200) comprising:
at least one analysis module (202) for receiving (400) a media stream from one or more of a plurality of sources (206), the media stream including data regarding a work, for generating (402) a representation of the work from at least a portion of said media stream, and for transmitting (404) said representation;
at least one First Tier Identification server (220) for:
receiving (600) said representation,
determining (602) whether said work from said representation is identifiable,
determining (702) whether said representation is similar to a previously received unidentified representation if said work is not identifiable, and
sending said representation to at least one Second Tier Identification server if said representation is similar to the previously received unidentified representation; and
at least one Second Tier Identification server (220) for identifying said work from said representation.

2. The system (200) of claim 1, wherein said at least one analysis module (202) further includes an input port (210) configured to receive said data regarding a work from a networked source (206).

3. The system (200) of claim 1, wherein said at least one analysis module (202) further includes an input port (210) configured to receive said data from a broadcast source (204).

4. The system (200) of claim 1, wherein said at least one analysis module (202) further includes an input port (210) configured to receive said data in the form of a pre-broadcast digital form.

5. The system (200) of claim 1, wherein said at least one analysis module (202) and said at least one First Tier Identification server are coupled over a network (208).

6. The system (200) of claim 5, wherein said network (208) comprises the Internet.

7. The system (200) of claim 1, wherein said representation comprises feature vectors.

8. The system (200) of claim 1, wherein said representation comprises a spectral representation of said received work.

9. The system (200) of claim 1, wherein said representation comprises the text output of a speech recognition system.

10. The system (200) of claim 1, wherein said representation comprises the musical score output of a music transcription system.

11. The system (200) of claim 1, wherein said representation comprises a bit calculated key.

12. The system (200) of claim 1, wherein at least one of said First Tier Identification server (220) and said Second Tier Identification server (220) is configured to identify (502) said received work using feature vectors from said representation.

13. The system (200) of claim 1, wherein at least one of said First Tier Identification server (220) and said Second Tier Identification server (220) is configured to identify (502) said received work using a spectral representation from said representation.

14. The system (200) of claim 1, wherein at least one of said First Tier Identification server (220) and said Second Tier Identification server (220) is configured to identify (502) said received work using the text output of a speech recognition system from said representation.

15. The system (200) of claim 1, wherein at least one of said First Tier Identification server (220) and said Second Tier Identification server (220) are configured to identify (502) said received work using a musical score output of a music transcription system from said representation.

16. The system (200) of claim 1, wherein at least one of said First Tier Identification server (220) and said Second Tier Identification server (220) is configured to identify (502) said received work using a bit calculated key from said representation.

17. The system (200) of claim 1, wherein said at least one analysis module (202) is further configured to receive a plurality of streaming sources for analysis at a single location.

18. The system (200) of claim 1, wherein said at least one analysis module (202) is further configured to receive a plurality of streaming sources for analysis at a plurality of different access points of the network (208).

19. The system (200) of claim 1, wherein said at least one analysis module (202) is configured to provide said representation to said at least one First Tier Identification server (220) at a predetermined time interval.

20. The system (200) of claim 19, wherein said predetermined time interval comprises at least once a day.

21. The system (200) of claim 19, wherein said predetermined time interval comprises approximately once an hour.

22. The system (200) of claim 19, wherein said at least one analysis module (202) is configured to provide said representation to said at least one First Tier Identification server (220) in response to generating said representation.

23. The system (200) of claim 19, wherein said at least one analysis module (202) is configured to provide said representations to said at least one First Tier Identification server (220) based on an out-of-band event.

24. The system (200) of claim 1, wherein said First Tier Identification server (220) is further configured to generate a playlist of identified works.

25. A method for identifying (502) a work from data received by an analysis module (202) that generates a representation of said data and wherein said data includes data of said work, the method comprising:
receiving (600) a representation of the work by a First Tier Identification server (220);
attempting (602), by said First Tier Identification server, to identify said work based on comparing the received representation to a plurality of cached representations;
if the First Tier Identification server (220) has not identified the work, determining (702) whether said received representation is similar to a previously received unidentified representation; and
if said received representation is similar to a previously received unidentified received representation, sending said received representation to a Second Tier Identification server for identification.

26. The method of claim 25, wherein said Second Tier Identification server includes a plurality of tiers of Identification servers.

27. The method of claim 25, further including the act of providing a reference database of representations expected to be detected on said First Tier Identification server.

28. A program storage device readable by a machine containing a set of instructions to perform a method by the machine, the method being according to any one of claims 25 to 27.

## Patentansprüche

1. Identifikationssystem (200) für (neue) Medien, welches umfasst:
mindestens ein Analysemodul (202) zum Empfangen (400) eines Medienstroms von einer oder mehreren einer Vielzahl von Quellen (206), wobei der Medienstrom Daten bezüglich eines Werks umfasst, zum Erzeugen (402) einer Darstellung des Werks aus mindestens einem Teil des Medienstroms und zum Übertragen (404) der Darstellung;
mindestens einen Identifikationsserver der ersten Stufe (220) zum:
Empfangen (600) der Darstellung,
Ermitteln (602), ob das Werk aus der Darstellung identifizierbar ist,
Ermitteln (702), ob die Darstellung einer zuvor empfangenen, nicht identifizierten Darstellung ähnelt, wenn das Werk nicht identifizierbar ist, und
Senden der Darstellung zu mindestens einem Identifikationsserver der zweiten Stufe, wenn die Darstellung der zuvor empfangenen, nicht identifizierten Darstellung ähnelt; und
mindestens einen Identifikationsserver der zweiten Stufe (220) zum Identifizieren des Werks aus der Darstellung.

2. System (200) nach Anspruch 1, **dadurch gekennzeichnet, dass** das mindestens eine Analysemodul (202) weiterhin einen Eingangsport (210) umfasst, der zum Empfangen der Daten bezüglich eines Werks von einer vernetzten Quelle (206) ausgelegt ist.

3. System (200) nach Anspruch 1, **dadurch gekennzeichnet, dass** das mindestens eine Analysemodul (202) weiterhin einen Eingangsport (210) umfasst, der zum Empfangen der Daten von einer Ausstrahlungsquelle (204) ausgelegt ist.

4. System (200) nach Anspruch 1, **dadurch gekennzeichnet, dass** das mindestens eine Analysemodul (202) weiterhin einen Eingangsport (210) umfasst, der zum Empfangen der Daten in Form einer digitalen Vorausstrahlungsform ausgelegt ist.

5. System (200) nach Anspruch 1, **dadurch gekennzeichnet, dass** das mindestens eine Analysemodul (202) und der mindestens eine Identifikationsserver der ersten Stufe über ein Netzwerk (208) miteinander verbunden sind.

6. System (200) nach Anspruch 5, **dadurch gekennzeichnet, dass** das Netzwerk (208) das Internet umfasst.

7. System (200) nach Anspruch 1, **dadurch gekennzeichnet, dass** die Darstellung Merkmalsvektoren umfasst.

8. System (200) nach Anspruch 1, **dadurch gekennzeichnet, dass** die Darstellung eine spektrale Darstellung des empfangenen Werks umfasst.

9. System (200) nach Anspruch 1, **dadurch gekennzeichnet, dass** die Darstellung die Textausgabe eines Spracherkennungssystems umfasst.

10. System (200) nach Anspruch 1, **dadurch gekennzeichnet, dass** die Darstellung die Musikpartiturausgabe eines Musiktranskriptionssystems umfasst.

11. System (200) nach Anspruch 1, **dadurch gekennzeichnet, dass** die Darstellung einen bit-berechneten Schlüssel umfasst.

12. System (200) nach Anspruch 1, **dadurch gekennzeichnet, dass** mindestens einer von: Identifikationsserver der ersten Stufe (220) und Identifikationsserver der zweiten Stufe (220) dafür ausgelegt ist, das empfangene Werk unter Verwendung von Merkmalsvektoren aus der Darstellung zu identifizieren (502).

13. System (200) nach Anspruch 1, **dadurch gekennzeichnet, dass** mindestens einer von: Identifikationsserver der ersten Stufe (220) und Identifikationsserver der zweiten Stufe (220) dafür ausgelegt ist, das empfangene Werk unter Verwendung einer spektralen Darstellung aus der Darstellung zu identifizieren (502).

14. System (200) nach Anspruch 1, **dadurch gekennzeichnet, dass** mindestens einer von: Identifikationsserver der ersten Stufe (220) und Identifikationsserver der zweiten Stufe (220) dafür ausgelegt ist, das empfangene Werk unter Verwendung der Textausgabe eines Spracherkennungssystems aus der Darstellung zu identifizieren (502).

15. System (200) nach Anspruch 1, **dadurch gekennzeichnet, dass** mindestens einer von: Identifikationsserver der ersten Stufe (220) und Identifikationsserver der zweiten Stufe (220) dafür ausgelegt ist, das empfangene Werk unter Verwendung einer Musikpartiturausgabe eines Musiktranskriptionssystems aus der Darstellung zu identifizieren (502).

16. System (200) nach Anspruch 1, **dadurch gekennzeichnet, dass** mindestens einer von: Identifikationsserver der ersten Stufe (220) und Identifikationsserver der zweiten Stufe (220) dafür ausgelegt ist, das empfangene Werk unter Verwendung eines bit-berechneten Schlüssels aus der Darstellung zu identifizieren (502).

17. System (200) nach Anspruch 1, **dadurch gekennzeichnet, dass** das mindestens eine Analysemodul (202) weiterhin dafür ausgelegt ist, mehrere Streamingquellen für die Analyse an einer einzigen Stelle zu empfangen.

18. System (200) nach Anspruch 1, **dadurch gekennzeichnet, dass** das mindestens eine Analysemodul (202) weiterhin dafür ausgelegt ist, mehrere Streamingquellen für die Analyse an mehreren unterschiedlichen Zugangspunkten des Netzwerks (208) zu empfangen.

19. System (200) nach Anspruch 1, **dadurch gekennzeichnet, dass** das mindestens eine Analysemodul (202) weiterhin dafür ausgelegt ist, die Darstellung bei einem vorbestimmten Zeitintervall zu mindestens einem Identifikationsserver der ersten Stufe (220) zu liefern.

20. System (200) nach Anspruch 19, **dadurch gekennzeichnet, dass** der vorbestimmte Zeitintervall mindestens einmal pro Tag umfasst.

21. System (200) nach Anspruch 19, **dadurch gekennzeichnet, dass** der vorbestimmte Zeitintervall etwa einmal pro Stunde umfasst.

22. System (200) nach Anspruch 19, **dadurch gekennzeichnet, dass** das mindestens eine Analysemodul (202) dafür ausgelegt ist, die Darstellung zu dem mindestens einen Identifikationsserver der ersten Stufe (220) als Reaktion auf das Erzeugen der Darstellung vorzusehen.

23. System (200) nach Anspruch 19, **dadurch gekennzeichnet, dass** das mindestens eine Analysemodul (202) dafür ausgelegt ist, die Darstellungen zu dem mindestens einen Identifikationsserver der ersten Stufe (220) beruhend auf einem bandexternen Vorgang vorzusehen.

24. System (200) nach Anspruch 1, **dadurch gekennzeichnet, dass** der Identifikationsserver der ersten Stufe (220) weiterhin dafür ausgelegt ist, eine Wiedergabeliste identifizierter Werke zu erzeugen.

25. Verfahren zum Identifizieren (502) eines Werks aus Daten, die von einem Analysemodul (202) empfangen werden, das eine Darstellung der Daten erzeugt, und wobei die Daten Daten des Werks umfassen, wobei das Verfahren umfasst:
Empfangen (600) einer Darstellung des Werks durch einen Identifikationsserver der ersten Stufe (220);
Versuchen (602) mittels des Identifikationsservers der ersten Stufe, das Werk beruhend auf dem Vergleichen der empfangenen Darstellung mit mehren im Zwischenspeicher befindlichen Darstellungen zu identifizieren;
wenn der Identifikationsserver der ersten Stufe (220) das Werk nicht identifiziert hat, das Ermitteln (702), ob die empfangene Darstellung einer zuvor empfangenen, nicht identifizierten Darstellung ähnelt; und
wenn die empfangene Darstellung einer zuvor empfangenen, nicht identifizierten empfangenen Darstellung ähnelt, das Senden der empfangenen Darstellung zu einem Identifikationsserver der zweiten Stufe zur Identifizierung.

26. Verfahren nach Anspruch 25, **dadurch gekennzeichnet, dass** der Identifikationsserver der zweiten Stufe mehrere Stufen von Identifikationsservern umfasst.

27. Verfahren nach Anspruch 25, welches weiterhin den Vorgang des Vorsehens einer Referenzdatenbank von Darstellungen umfasst, deren Detektieren auf dem Identifikationsserver der ersten Stufe erwartet wird.

28. Maschinell lesbare Programmspeichervorrichtung, die eine Reihe von Befehlen zum Ausführen eines Verfahrens durch die Maschine enthält, wobei das Verfahren nach einem der Ansprüche 25 bis 27 ist.

## Revendications

1. Système d'identification de média nouveau (200) comprenant :
au moins un module d'analyse (202) pour recevoir (400) un flux média provenant d'une ou plusieurs sources parmi une pluralité de sources (206), le flux média incluant des données concernant une oeuvre, pour générer (402) une représentation de l'oeuvre à partir d'au moins une partie dudit flux média, et pour transmettre (404) ladite représentation ;
au moins un serveur d'Identification de Premier Niveau (220) pour :
recevoir (600) ladite représentation,
déterminer (602) si ladite oeuvre provenant de ladite représentation peut être identifiée,
déterminer (702) si ladite représentation est similaire à une représentation non identifiée précédemment reçue si ladite oeuvre ne peut pas être identifiée, et
envoyer ladite représentation à au moins un serveur d'Identification de Second Niveau si ladite représentation est similaire à la représentation non identifiée précédemment reçue ; et
au moins un serveur d'Identification de Second Niveau (220) pour identifier ladite oeuvre à partir de ladite représentation.

2. Système (200) selon la revendication 1, dans lequel ledit au moins un module d'analyse (202) inclut en outre un port d'entrée (210) configuré pour recevoir lesdites données concernant une oeuvre provenant d'une source en réseau (206).

3. Système (200) selon la revendication 1, dans lequel ledit au moins un module d'analyse (202) inclut également un port d'entrée (210) configuré pour recevoir lesdites données provenant d'une source de diffusion (204).

4. Système (200) selon la revendication 1, dans lequel ledit au moins un module d'analyse (202) inclut de plus un port d'entrée (210) configuré pour recevoir lesdites données sous une forme numérique de prédiffusion.

5. Système (200) selon la revendication 1, dans lequel ledit au moins un module d'analyse (202) et ledit au moins un serveur d'Identification de Premier Niveau sont couplés sur un réseau (208).

6. Système (200) selon la revendication 5, dans lequel ledit réseau (208) comprend l'Internet.

7. Système (200) selon la revendication 1, dans lequel ladite représentation comprend des vecteurs de caractéristiques.

8. Système (200) selon la revendication 1, dans lequel ladite représentation comprend une représentation spectrale de ladite oeuvre reçue.

9. Système (200) selon la revendication 1, dans lequel ladite représentation comprend la sortie sous forme de texte d'un système de reconnaissance vocale.

10. Système (200) selon la revendication 1, dans lequel ladite représentation comprend la sortie sous forme de partition d'un système de transcription de musique.

11. Système (200) selon la revendication 1, dans lequel ladite représentation comprend une clé binaire calculée.

12. Système (200) selon la revendication 1, dans lequel au moins un serveur parmi ledit serveur d'Identification de Premier Niveau (220) et ledit serveur d'Identification de Second Niveau (220) est configuré pour identifier (502) ladite oeuvre reçue en utilisant des vecteurs de caractéristiques, à partir de ladite représentation.

13. Système (200) selon la revendication 1, dans lequel au moins un serveur parmi ledit serveur d'Identification de Premier Niveau (220) et ledit serveur d'Identification de Second Niveau (220) est configuré pour identifier (502) ladite oeuvre reçue en utilisant une représentation spectrale, à partir de ladite représentation.

14. Système (200) selon la revendication 1, dans lequel au moins un serveur parmi ledit serveur d'Identification de Premier Niveau (220) et ledit serveur d'Identification de Second Niveau (220) est configuré pour identifier (502) ladite oeuvre reçue en utilisant la sortie sous forme de texte d'un système de reconnaissance vocale, à partir de ladite représentation.

15. Système (200) selon la revendication 1, dans lequel au moins un serveur parmi ledit serveur d'Identification de Premier Niveau (220) et ledit serveur d'Identification de Second Niveau (220) est configuré pour identifier (502) ladite oeuvre reçue en utilisant une sortie sous forme de partition d'un système de transcription de musique, à partir de ladite représentation.

16. Système (200) selon la revendication 1, dans lequel au moins un serveur parmi ledit serveur d'Identification de Premier Niveau (220) et ledit serveur d'Identification de Second Niveau (220) est configuré pour identifier (502) ladite oeuvre reçue en utilisant une clé binaire calculée, à partir de ladite représentation.

17. Système (200) selon la revendication 1, dans lequel ledit au moins un module d'analyse (202) est en outre configuré pour recevoir une pluralité de sources temps réel pour une analyse à un seul emplacement.

18. Système (200) selon la revendication 1, dans lequel ledit au moins un module d'analyse (202) est également configuré pour recevoir une pluralité de sources temps réel pour une analyse en une pluralité de différents points d'accès du réseau (208).

19. Système (200) selon la revendication 1, dans lequel ledit au moins un module d'analyse (202) est configuré pour délivrer ladite représentation audit au moins un serveur d'Identification de Premier Niveau (220) à un intervalle de temps prédéterminé.

20. Système (200) selon la revendication 19, dans lequel ledit intervalle de temps prédéterminé comprend au moins une fois par jour.

21. Système (200) selon la revendication 19, dans lequel ledit intervalle de temps prédéterminé comprend approximativement une fois par heure.

22. Système (200) selon la revendication 19, dans lequel ledit au moins un module d'analyse (202) est configuré pour délivrer ladite représentation audit au moins un serveur d'Identification de Premier Niveau (220) en réponse à la génération de ladite représentation.

23. Système (200) selon la revendication 19, dans lequel ledit au moins un module d'analyse (202) est configuré pour délivrer lesdites représentations audit au moins un serveur d'Identification de Premier Niveau (220) sur la base d'un événement hors bande.

24. Système (200) selon la revendication 1, dans lequel ledit serveur d'Identification de Premier Niveau (220) est en outre configuré pour générer une liste de lecture d'oeuvres identifiées.

25. Procédé pour identifier (502) une oeuvre à partir de données reçues par un module d'analyse (202) qui génère une représentation desdites données et dans lequel lesdites données incluent des données de ladite oeuvre, le procédé comprenant:
recevoir (600) une représentation de l'oeuvre par un serveur d'Identification de Premier Niveau (220) ;
tenter (602), par ledit serveur d'Identification de Premier Niveau, d'identifier ladite oeuvre sur la base d'une comparaison de la représentation reçue à une pluralité de représentations mises en mémoire cache ;
si le serveur d'Identification de Premier Niveau (220) n'a pas identifié l'oeuvre, déterminer (702) si ladite représentation reçue est similaire à une représentation non identifiée précédemment reçue ; et
si ladite représentation reçue est similaire à une représentation reçue non identifiée précédemment reçue, envoyer ladite représentation reçue à un serveur d'Identification de Second Niveau en vue d'une identification.

26. Procédé selon la revendication 25, dans lequel ledit serveur d'Identification de Second Niveau inclut une pluralité de niveaux de serveurs d'identification.

27. Procédé selon la revendication 25, incluant en outre l'action de fournir une base de données de référence de représentations dont la détection par ledit serveur d'Identification de Premier Niveau est attendue.

28. Dispositif de mémorisation de programme lisible par une machine contenant un ensemble d'instructions pour mettre en oeuvre un procédé par la machine, le procédé étant selon l'une quelconque des revendications 25 à 27.
